# EUROPEAN PATENT APPLICATION

(11) **EP 4 703 143 A1**
(43) Date of publication of application: **04.03.2026**
(21) Application number: 25197310.3
(22) Date of filing: 21.08.2025
(51) Int. Cl.: B41J 11/00, B41J 2/21, B41M 5/00

(54) **INKJET RECORDING APPARATUS**

(30) Priority: 26.08.2024 JP 2024144264
(71) Applicant: KYOCERA Document Solutions Inc., Osaka-shi, Osaka 540-8585 (JP)
(72) Inventor: FUNAKOSHI, Daichi, Osaka-shi, Osaka, 540-8585 (JP); KIDA, Yukari, Osaka-shi, Osaka, 540-8585 (JP)
(74) Representative: Heuer, Wilhelm

(57) **Abstract**

An inkjet recording apparatus (100) includes a conveyance portion (1), an application portion (2), a first drying portion (5), a recording portion (3), and a second drying portion (6). The first drying portion (5) dries a pretreatment liquid applied to a recoding medium (S) by the application portion (2). The recording portion (3) ejects ink onto the recording medium (S) having passed through the first drying portion (5). The second drying portion (6) dries the ink applied to the recoding medium (S) by the recording portion (3). The pretreatment liquid contains first resin particles with a minimum film formation temperature of 40°C to 80°C. The ink contains second resin particles with a minimum film formation temperature of 35°C to 80°C. The drying temperature in the first drying portion (5) is lower than the first minimum film formation temperature and the drying temperature in the second drying portion (6) is higher than the first and second minimum film formation temperatures.

## Description

### BACKGROUND

The present disclosure relates to an inkjet recording apparatus that records images by ejecting ink onto a recording medium.

As recording apparatuses such as facsimile machines, copiers, and printers, inkjet recording apparatuses, which record images by ejecting ink onto a recording medium, are widely used for their capability of forming high-definition images.

In such inkjet recording apparatuses, aqueous pigment ink that uses a pigment as a colorant for its excellent weather resistance is the mainstream. Inconveniently, aqueous pigment ink has a drawback of, when ejected onto a recoding medium with low wettability such as a plastic sheet, being prone to cause repelling of and blotting with the ink.

To cope with that, a method has been presented in which a background layer is formed using ink (white ink) for a lower layer and on top of it an image is formed (overlaid) using ink (non-white ink) for an upper layer, thereby preventing blotting with ink and forming an image with satisfactory durability.

### SUMMARY

An object of the present disclosure is to provide an inkjet recording apparatus that can prevent blotting with ink due to insufficient drying of a pretreatment liquid applied to a recoding medium and that can improve the abrasion resistance of ink after printing.

According to one aspect of the present disclosure, an inkjet recording apparatus includes a conveyance portion, an application portion, a first drying portion, a recording portion, and a second drying portion. The conveyance portion conveys a recording medium. The application portion applies a pretreatment liquid to the recoding medium conveyed by the conveyance portion. The first drying portion is arranged downstream of the application portion with respect to the conveyance direction of the recoding medium and dries the pretreatment liquid applied to the recoding medium by the application portion. The recording portion is arranged downstream of the first drying portion with respect to the conveyance direction of the recoding medium and has a first recording head that ejects ink onto the recording medium. The second drying portion is arranged downstream of the recording portion with respect to the conveyance direction of the recoding medium and dries the ink applied to the recoding medium by the recording portion. The pretreatment liquid contains first resin particles with a minimum film formation temperature of 40°C or more but 80°C or less. The ink contains second resin particles with a minimum film formation temperature of 35°C or more but 80°C or less. When the minimum film formation temperature of the first resin particles is a first minimum film formation temperature and the minimum film formation temperature of the second resin particles is a second minimum film formation temperature, the drying temperature in the first drying portion is lower than the first minimum film formation temperature and the drying temperature in the second drying portion is higher than the first and second minimum film formation temperatures.

### BRIEF DESCRIPTION OF THE DRAWINGS

Fig. 1 is a schematic diagram showing the structure of an inkjet recording apparatus 100 according to a first embodiment of the present disclosure.
Fig. 2 is an enlarged view of and around an application portion 2, a recording portion 3, and a first drying portion 5 in Fig. 1.
Fig. 3 is a schematic diagram showing the structure of an inkjet recording apparatus 100 according to a second embodiment of the present disclosure.

### DETAILED DESCRIPTION

An embodiment of the present disclosure will be described in detail below. In the following description, a compound and its derivatives may be comprehensively referred to by appending "-based" to the name of the compound. When "-based" is appended to the name of a compound to denote the name of a polymer, it means that the repeating unit of the polymer is derived from any the compound and its derivatives. Acrylic and methacrylic may be comprehensively referred to as "(meth)acrylic." Acryloyl (CH₂=CH-CO-) and methacryloyl (CH₂=C(CH₃)-CO-) may be comprehensively referred to as "(meth)acryloyl."

### [1. Pretreatment Liquid]

A pretreatment liquid used in an inkjet recording apparatus of the present disclosure adjusts the wettability of a plastic sheet as a recording medium to prevent repelling of and blotting with ink when the inkjet recording apparatus forms an image with aqueous ink that contains a pigment dispersion containing a pigment and a resin along with an organic solvent and water. The pretreatment liquid contains at least a binder resin, a surfactant, a water-soluble organic solvent, and water. The pretreatment liquid used in the inkjet recording apparatus of the present disclosure will be described in detail below.

### (Binder Resin)

The binder resin is added for the purpose of giving wettability to the recoding medium having the pretreatment liquid applied to it. This helps prevent repelling of ink droplets that occurs with a recording medium with a low surface tension. The pretreatment liquid contains resin particles with a minimum film formation temperature (MFT) of 40 to 80°C (hereinafter, referred to as first resin particles) as the binder resin. The minimum film formation temperature was measured in accordance with the ASTM D2354 test method using a measuring device (MFFTB90, produced by Rhopoint Instruments).

If the minimum film formation temperature of the first resin particles contained in the pretreatment liquid (hereinafter, referred to as the first minimum film formation temperature) is too low, the first resin particles starts to form a film early. As a result, the film of the first resin particles acts like a lid over the pretreatment liquid, preventing the drying of the pretreatment liquid. By contrast, if the first minimum film formation temperature is too high, in the drying process after ink ejection, the recording medium needs to be heated to a high temperature to make the resin particles contained in the pretreatment liquid form a film, and this may damage the quality of a heat-sensitive recording medium such as OPP sheets. The first minimum film formation temperature is preferably between 40°C and 80°C.

### (First Resin Particles)

The first resin particles added to the pretreatment liquid are not particularly limited as long as they are resin particles with a minimum film formation temperature of 40 to 80°C, while urethane resin particles are preferred. Usable as the urethane resin particles are anionic urethane resin particles, nonionic urethane resin particles, and cationic urethane resin particles. Anionic urethane resins are urethane resins that have anionic properties. Cationic urethane resins are urethane resins that have cationic properties. Nonionic urethane resins are urethane resins that have neither anionic nor cationic properties.

The content proportion of urethane resin in the urethane resin particles is preferably 80 mass% or more, more preferably 90 mass% or more, and even more preferably 100 mass%.

The volume median diameter of the urethane resin particles is preferably 10 nm or more but 100 nm or less, and more preferably 10 nm or more but 50 nm or less. By setting the volume median diameter of the urethane resin particles to 10 nm or more, the storage stability of the pretreatment liquid can be optimized. By setting the volume median diameter of the urethane resin particles to 100 nm or less, the ejection stability of the pretreatment liquid can be optimized.

The content proportion of first resin particles in the pretreatment liquid is preferably 2.0 mass% or more but 15.0 mass% or less, more preferably 4.0 mass% or more but 10.0 mass% or less. By setting the content proportion of the first resin particles to 2.0 mass% or more, the adhesion properties of the image formed with ink to the recording medium can be optimized. By setting the content proportion of the first resin particles to 15.0 mass% or less, the application properties of the pretreatment liquid can be optimized. When the pretreatment liquid is applied to the recording medium by an inkjet method, the ejection stability of the pretreatment liquid can be optimized.

### (Water-soluble organic solvent)

The water-soluble organic solvent is added to increase compatibility with the binder resin and to retain water in the pretreatment liquid. Thus, when the moisture in the pretreatment liquid evaporates in a nozzle for ejecting the pretreatment liquid or in an application device, it is possible to suppress an increase in the viscosity of the pretreatment liquid and, when the pretreatment liquid is applied by the inkjet method, it is possible to prevent ejection failure or bent ejection from the nozzle and the like. It is thus possible to keep ejection stability.

The water-soluble organic solvent added to the pretreatment liquid is not particularly limited as long as it has compatibility with the binder resin. Examples of the water-soluble organic solvent that can be used in the pretreatment liquid include polyhydric alcohols, polyhydric alcohol alkyl ethers, polyhydric alcohol aryl ethers, nitrogen-containing heterocyclic compounds, amides, amines, sulfur-containing compounds, propylene carbonate, and ethylene carbonate. Among these, polyhydric alcohols and polyhydric alcohol alkyl ethers are preferred, more preferred being glycol compounds and glycol ether compounds, still more preferred being propylene glycol, triethylene glycol monobutyl ether (butyl triglycol), and dipropylene glycol methyl ether.

While the amount of water-soluble organic solvent added is not particularly limited, it is preferably 5 to 40 mass% of the entire pretreatment liquid, and more preferably 10 to 35 mass%. With 5 to 40 mass% added, sufficient moisture is retained in the pretreatment liquid and the viscosity is not too high. This allows effective application to the recording medium.

### (Surfactant)

The surfactant is added to improve the wettability of the pretreatment liquid to the recording medium. The amount of surfactant added is preferably 0.001 to 5 mass% of the entire pretreatment liquid, and more preferably 0.05 to 2 mass%. Adding 0.001 mass% or more achieves the effect of adding the surfactant. However, adding more than 5 mass% is not expected to increase the effect.

Usable as the surfactant are various surfactants such as silicone-based surfactants, nonionic surfactants, anionic surfactants, cationic surfactants, and betaine-based surfactants, among which nonionic surfactants are preferred. Among those surfactants, one type may be used singly or two or more types may be used in combination.

### (Water)

The pretreatment liquid used in the present disclosure is aqueous and contains water as an essential component. The water contained in the pretreatment liquid is not particularly limited within the scope consistent with the object of the present disclosure and water of desired purity such as purified water or ion-exchange water can be selected as appropriate. The water content of the pretreatment liquid is not particularly limited within the scope consistent with the object of the present disclosure and can be changed as appropriate according to the amounts of other components used described above. The water content of the pretreatment liquid is preferably 50 to 90 mass% of the total mass of the pretreatment liquid.

The pretreatment liquid of the present disclosure may contain materials known to be used in treatment liquids, such as a foam suppressor, a pH adjuster, an antiseptic mildewproofing agent, and a rust inhibitor as necessary.

### (Foam Suppressor)

The foam suppressor is added to suppress the foaming of the pretreatment liquid. In general, a liquid with a high surface tension such as water is difficult to foam because of the force acting to make the surface area of the liquid as small as possible; a liquid with a low surface tension and a high viscosity easily foams and the produce foam is difficult to defoam. The amount of foam suppressor added is preferably 0.01 to 10 mass%, and more preferably 0.02 to 5 mass%. Adding 0.01 mass% or more achieves a sufficient effect of suppressing foam. With 10 mass% or less, the foam suppressor remains fully soluble in the pretreatment liquid.

### (pH Adjuster)

The pH adjuster is not particularly limited and can be selected as appropriate to suit the purpose so long as it can adjust the pH value to six to ten without adversely affecting the pretreatment liquid. With a pH value of six or higher, conveyance components such as conveyance rollers that make contact with the pretreatment liquid are less likely to corrode.

Examples of preferable pH adjusters include alcohol amines, alkali metal hydroxides, ammonium hydroxides, phosphonium hydroxides, and carbonates of alkali metals. Examples of alcohol amines include diethanolamine, triethanolamine, and 2-amino-2-ethyl-1,3-propanediol. Examples of alkali metal hydroxides include lithium hydroxide, sodium hydroxide, and potassium hydroxide. Examples of ammonium hydroxides include ammonium hydroxide and quaternary ammonium hydroxides. Examples of phosphonium hydroxides include quaternary phosphonium hydroxides. Examples of alkali metal carbonates include lithium carbonate, sodium carbonate, and potassium carbonate.

### (Antiseptic Mildewproofing Agent)

Suitably usable as the antiseptic mildewproofing agent are, for example, sodium dehydroacetate, sodium sorbate, sodium 2-pyridinethiol-1-oxide, sodium benzoate, sodium pentachlorophenol, and sodium 1,2-benzoisothiazolin-3-one.

### (Rust Inhibitor)

Suitably usable as the rust inhibitor are, for example, acidic sulfites, sodium thiosulfate, ammonium thiodiglycolate, diisopropyl ammonium nitrite, dicyclohexyl ammonium nitrite, pentaerythritol tetranitrate, and 1,2,3-benzotriazole.

The pretreatment liquid of the present disclosure obtained as described above is applied by the inkjet method to the recoding medium before being subjected to recording with aqueous ink (pigment ink) to improve the wettability (wet tension) of the surface of the recoding medium. This helps prevent repelling of and blotting with the aqueous ink ejected onto the recoding medium.

The amount of pretreatment liquid applied is not particularly limited, but if the amount applied is less than 1 g/m², the wettability (wet tension) of the surface of the recording medium cannot be sufficiently improved and the effect of preventing repelling of and blotting with aqueous ink is insufficient. In contrast, if the amount applied is more than 20 g/m², the wettability (wet tension) of the surface of the recording medium is too high and the pretreatment liquid does not dry in time, so it may cause blotting with aqueous ink. Thus, the amount of pretreatment liquid applied is preferably 1 g/m² or more but 20 g/m² or less, and more preferably 5 g/m² or more but 10 g/m² or less.

### [2. Ink]

The ink used in the inkjet recording apparatus of the present disclosure contains a pigment, a binder resin, and an aqueous solvent. Preferably, the ink further contains a pigment-dispersed resin.

### (Pigment)

In the ink, the pigment constitutes, for example, pigment particles together with the pigment-dispersed resin. The pigment particle is composed of, for example, a core containing the pigment and the pigment-dispersed resin that coats the core. The pigment-dispersed resin is present, for example, in a form dispersed in a solvent. From the viewpoint of optimizing the color density, hue, or stability of the ink, the volume median diameter of the pigment particles is preferably 30 nm or more but 200 nm or less, and more preferably 70 nm or more but 130 nm or less.

Examples of the pigment include yellow, orange, red, blue, purple, and black pigments. Examples of yellow pigments include C.I. Pigment Yellow (74, 93, 95, 109, 110, 120, 128, 138, 139, 151, 154, 155, 173, 180, 185, and 193). Examples of orange pigments include C.I. Pigment Orange (34, 36, 43, 61, 63, and 71). Examples of red pigments include C.I. Pigment Red (122 and 202). Examples of blue pigments include C.I. Pigment Blue (15, more specifically, 15:3). Examples of purple pigments include C.I. Pigment Violet (19, 23, and 33). Examples of black pigments include C.I. Pigment Black (7).

In the ink, the content proportion of the pigment is preferably 0.5 mass% or more but 10.0 mass% or less, and more preferably 1.5 mass% or more but 5.0 mass% or less. With the content proportion of the pigment set to 0.5 mass% or more, the ink can form images with the desired image density. With the content proportion of the pigment set to 10 mass% or less, the ink has satisfactory fluidity.

### (Pigment-Dispersed Resin)

The pigment-dispersed resin (pigment-coated resin) is a resin that is soluble in the aqueous solvent of the ink. Part of the pigment-dispersed resin is present, for example, on the surface of the pigment particles and optimizes the dispersiveness of the pigment particles. Part of the pigment-dispersed resin is present, for example, in a form dissolved in the aqueous solvent of the ink.

The pigment-dispersed resin is preferably styrene-(meth)acrylic resin. The styrene-(meth)acrylic resin has, along with a styrene unit, a repeating unit derived from at least one monomer among (meth)acrylic acid alkyl esters and (meth)acrylic acids. Examples of (meth)acrylic acid alkyl esters include methyl (meth)acrylate, ethyl (meth)acrylate, propyl (meth)acrylate, and butyl (meth)acrylate. The styrene-(meth)acrylic resin is preferably a copolymer of styrene, methyl methacrylate, methacrylic acid, and butyl acrylate.

In the ink, the content proportion of the pigment-dispersed resin is preferably 0.1 mass% or more but 4.0 mass% or less, and more preferably 0.5 mass% or more but 1.5 mass% or less. Setting the content proportion of the pigment-dispersed resin to 0.1 mass% or more but 4.0 mass% or less gives the ink satisfactory ejection stability.

In the ink, the amount of pigment-dispersed resin contained in 100 mass parts of the pigment is preferably 10 mass parts or more but 60 mass parts or less, and more preferably 20 mass parts or more but 30 mass parts or less. Setting the content proportion of the pigment-dispersed resin to 10 mass parts or more but 60 mass parts or less helps optimize the ejection stability of the ink.

### (Binder Resin)

The ink contains resin particles with a minimum film formation temperature (MFT) of 35 to 80°C (hereinafter, referred to as the second resin particles) as the binder resin. If the minimum film formation temperature of the second resin particles in the ink (hereinafter referred to as the second minimum film formation temperature) is too low, the resin particles form a film in a normal-temperature environment, resulting in ink discharge failure. By contrast, if the second minimum film formation temperature is too high, in the drying process after ink ejection, the recording medium needs to be heated to a high temperature to make the resin particles contained in the ink form a film, and this may damage the quality of a heat-sensitive recording medium such as OPP sheets. The second minimum film formation temperature is preferably 35°C or more but 80°C or less.

The second resin particles added to the ink are not particularly limited as long as they are resin particles with a minimum film formation temperature of 35 to 80°C, while urethane resin particles similar to the first resin particles added to the pretreatment liquid are preferred. Usable as the urethane resin particles are anionic urethane resin particles, nonionic urethane resin particles, and cationic urethane resin particles. Anionic urethane resins are urethane resins that have anionic properties. Cationic urethane resins are urethane resins that have cationic properties. Nonionic urethane resins are urethane resins that have neither anionic nor cationic properties.

The content proportion of urethane resin in the urethane resin particles is preferably 80 mass% or more, more preferably 90 mass% or more, and even more preferably 100 mass%.

The volume median diameter of the urethane resin particles is preferably 10 nm or more but 100 nm or less, and more preferably 10 nm or more but 50 nm or less. Setting the volume median diameter of the urethane resin particles to 10 nm or more helps optimize the storage stability of the ink. Setting the volume median diameter of the urethane resin particles to 100 nm or less helps optimize the ejection stability of the ink.

The content proportion of second resin particles in the ink is preferably 1.0 mass% or more but 12.0 mass% or less, more preferably 2.0 mass% or more but 6.0 mass% or less. Setting the content proportion of the second resin particles to 1.0 mass% or more helps optimize the adhesion of the image formed with ink to the recording medium. Setting the content proportion of the second resin particles to 12.0 mass% or less helps optimize the ejection stability of the ink.

The aqueous solvent contained in the ink is a solvent containing water. The aqueous solvent may function as a solvent or as a dispersion medium. Specific examples of aqueous solvent include aqueous solvent containing water and a water-soluble organic solvent.

### (Water)

The content proportion of water in the ink is preferably 25.0 mass% or more but 80.0 mass% or less, and more preferably 40.0 mass% or more but 70.0 mass% or less.

### (Water-Soluble Organic Solvent)

Examples of water-soluble organic solvents in ink include glycol compounds, glycol ether compounds, lactam compounds, nitrogen-containing compounds, acetate compounds, thiodiglycol, glycerin, and dimethyl sulfoxide.

Examples of glycol compounds include ethylene glycol, 1,3-propanediol, propylene glycol, 1,2-pentanediol, 1,5-pentanediol, 1,2-octanediol, 1,8-octanediol, 3-methyl-1,3-butanediol, 3-methyl-1,5-pentanediol, diethylene glycol, triethylene glycol, and tetraethylene glycol.

Examples of glycol ether compounds include diethylene glycol diethyl ether, diethylene glycol monobutyl ether, ethylene glycol monomethyl ether, ethylene glycol monobutyl ether, diethylene glycol monomethyl ether, diethylene glycol monoethyl ether, diethylene glycol diethyl ether, dipropylene glycol monomethyl ether, triethylene glycol monomethyl ether, triethylene glycol monoethyl ether, triethylene glycol monobutyl ether, and propylene glycol monomethyl ether.

Examples of lactam compounds include 2-pyrrolidone and N-methyl-2-pyrrolidone.

Examples of nitrogen-containing compounds include 1,3-dimethylimidazolidinone, formamide, and dimethylformamide.

Examples of acetate compounds include diethylene glycol monoethyl ether acetate.

As water-soluble organic solvents, glycol compounds or glycol ether compounds are preferred, and 1,3-propanediol, propylene glycol, triethylene glycol monobutyl ether, or dipropylene glycol monomethyl ether is more preferred.

The content proportion of the water-soluble organic solvent in the ink is preferably 10.0 mass% or more but 50.0 mass% or less, more preferably 25.0 mass% or more but 45.0 mass% or less.

### (Surfactant)

Preferably, the ink further contains a surfactant. The surfactant optimizes the compatibility and dispersion stability of the components in the ink. The surfactant also optimizes the wettability of the ink on the recording medium. As the surfactant in the ink, a nonionic surfactant is preferred.

Examples of nonionic surfactants in ink include acetylene glycol surfactants (surfactants containing acetylene glycol compounds), silicone surfactants (surfactants containing silicone compounds), and fluorosurfactants (surfactants containing fluoropolymers or fluorine-containing compounds). Examples of acetylene glycol surfactants include ethylene oxide adducts of acetylene glycol and propylene oxide adducts of acetylene glycol. Preferably, the ink contains a silicone surfactant.

The content proportion of the surfactant in the ink is preferably 0.01 mass% or more but 1.00 mass% or less, and more preferably 0.03 mass% or more but 0.20 mass% or less.

The ink may further contain known additives (for example, a foam suppressor, pH adjuster, mildewproofing agent, rust inhibitor, dissolution stabilizer, drying inhibitor, antioxidant, and viscosity adjuster) as needed. As the foam suppressor, pH adjuster, mildewproofing agent, and rust inhibitor, the same compounds as in the pretreatment liquid can be added.

### [3. Image Recording Method]

Next, an image recording method using an inkjet recording apparatus will be described. The inkjet recording apparatus used in the image recording method of the present disclosure is not particularly limited: a serial-head or line-head inkjet recording apparatus can be used. In particular, on an inkjet recording apparatus using aqueous pigment ink, using a plastic sheet as a recoding medium tends to cause repelling of and blotting with ink, but these problems are less likely to occur with the image recording method of the present disclosure.

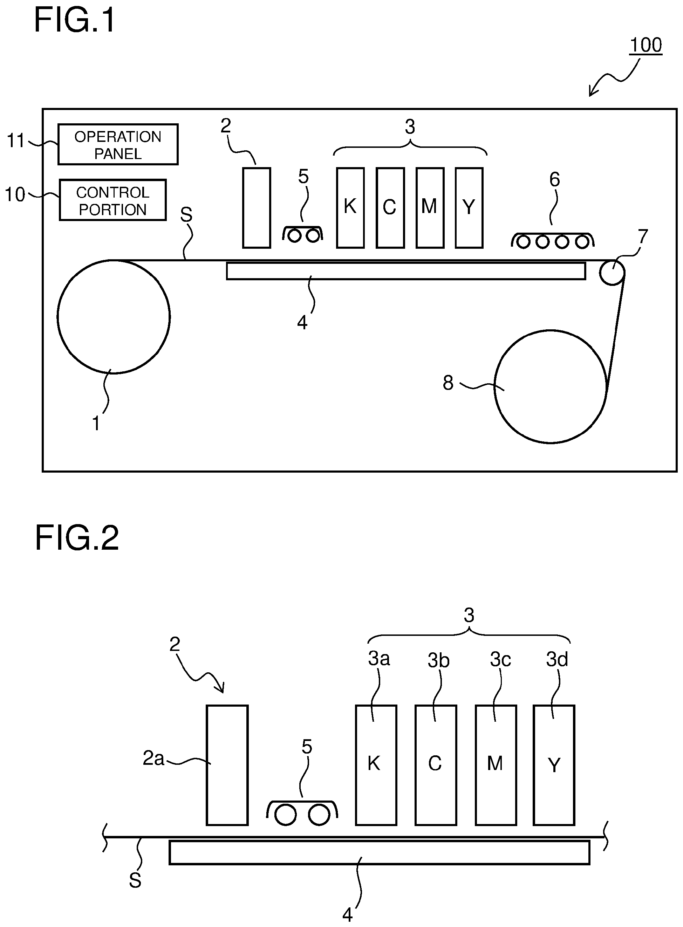

Fig. 1 is a schematic diagram showing the structure of an inkjet recording apparatus 100 according to a first embodiment of the present disclosure. Fig. 2 is an enlarged view of and around an application portion 2, a recording portion 3, and a first drying portion 5 in Fig. 1. As shown in Fig. 1, the inkjet recording apparatus 100 includes a sheet reel-out portion 1, the application portion 2, the recording portion 3, a conveyance plate 4, the first drying portion 5, a second drying portion 6, a sheet reel-in portion 7, a control portion 10, and an operation panel 11.

A sheet S, which is an elongate printing base material (here, a plastic sheet), is arranged in the sheet reel-out portion 1 provided upstream (left in Fig. 1) of the recording portion 3 in the conveyance direction. The sheet reel-out portion 1 includes a rotation shaft on which a sheet S in the form of a roll is mounted and a motor that drives the rotation shaft to rotate in a predetermined rotation direction (neither is shown). The sheet S is reeled out downstream (rightward in Fig. 1) in the conveyance direction as the rotation shaft rotates by being driven by the motor.

The application portion 2 is arranged downstream (to the right in Fig. 1) of the sheet reel-out portion 1 in the sheet conveyance direction. The application portion 2 includes a pretreatment liquid ejection head 2a. The pretreatment liquid ejection head 2a has a similar structure to recording heads 3a to 3d of the recording portion 3, which will be described later, and ejects the pretreatment liquid, described previously, by the inkjet method onto the sheet S reeled out from the sheet reel-out portion 1.

The recording portion 3 is arranged downstream (to the right in Fig. 1) of the application portion 2 in the sheet conveyance direction. The recording portion 3 includes recording heads 3a, 3b, 3c, and 3d. The recording heads 3a to 3d are supplied with, according to the colors for which they are intended, inks of four colors (yellow, magenta, cyan, and black) stored in ink tanks (not shown) respectively. Using the recording heads 3a to 3d, the recording portion 3 records an image on the sheet S reeled out from the sheet reel-out portion 1 and then having the pretreatment liquid applied to it by the application portion 2.

Below the application portion 2 and the recording portion 3, the conveyance plate 4 is arranged. The sheet S reeled out from the sheet reel-out portion 1 is supported by the conveyance plate 4 at a predetermined interval from the application portion 2 and the recording portion 3.

Between the application portion 2 and the recording portion 3, the first drying portion 5 is arranged. For example, the first drying portion 5 is a known drying device such as a hot-air drying device (dryer) that blows out hot air. Blowing hot air onto the sheet S conveyed while being supported by the conveyance plate 4 dries the pretreatment liquid applied to the sheet S by the application portion 2.

During the drying (first drying process) by the first drying portion 5 after the application of the pretreatment liquid, if the first resin particles contained in the pretreatment liquid start to form a film early, it acts like a lid over the surface of the pretreatment liquid and prevents the drying of the pretreatment liquid. Thus, the drying temperature of the pretreatment liquid in the first drying portion 5 is set to be lower than the first minimum film formation temperature of the first resin particles in the pretreatment liquid. As a result, in the first drying process, the first resin particles do not form a film, so the drying of the pretreatment liquid is not prevented.

The second drying portion 6 is arranged downstream (to the right in Fig. 1) of the recording portion 3 in the sheet conveyance direction. For example, the second drying portion 6 is configured as a dryer similar to the first drying portion 5. The ink ejected from the recording portion 3 onto the sheet S is dried while passing through the second drying portion 6 and the ink is thus fixed to the sheet S.

During the drying (second drying process) by the second drying portion 6 after the ejection of the ink, the drying temperature in the second drying portion 6 is higher than the higher of the first minimum film formation temperature of the first resin particles in the pretreatment liquid and the second minimum film formation temperature of the second resin particles in the ink, that is, higher than either of the first and second minimum film formation temperatures. As a result, in the second drying process, when the second resin particles contained in the ink start form a film, also the first resin particles contained in the pretreatment liquid start to form a film simultaneously. It is thus possible to obtain good adhesion and abrasion resistance of ink to the sheet S.

The drying temperature in the second drying portion 6 is lower than the temperature at which the sheet S may deteriorate. For example, if the sheet S is an OPP sheet, setting the drying temperature in the second drying portion 6 lower than 80°C prevents twisting (thermal deformation) of the OPP sheet and thereby prevents quality deterioration.

If the first and second drying portions 5 and 6 are hot-air drying devices, the wind velocity of the hot air blown from the first and second drying portions 5 and 6 is preferably 0.5 m/sec or more but 1 m/sec or less. More preferably, a slit in a drying nozzle (the part through which the hot air blows out) is 1 to 5 mm, and the distance from the printed result to the drying nozzle is 5 to 10 mm.

In this embodiment, the hot-air dryer is used as the first and second drying portions 5 and 6 to dry the pretreatment liquid and the ink, but any other drying device can be used as the first and second drying portions 5 and 6. For example, it can be configured with a heater and a reflection plate (reflector). As the heater, an infrared heater, a halogen heater, a ceramic heater, high-frequency induction heating (IH), or the like, can be used.

The sheet S having passed through the second drying portion 6 and having the ink fixed to it has its conveyance direction changed by a guide roller 7 and is then reeled into the form of a roll by the sheet reel-in portion 8.

The control portion 10 controls the ejection of ink in the recording portion 3 according to image data received from an external computer. The control portion 10 determines whether to eject the pretreatment liquid and the amount of it to eject in the application portion 2 as will be described later.

The operation panel 11 functions as a touch panel for the user to make various settings and inputs for the inkjet recording apparatus 100, while it also displays the status of the inkjet recording apparatus 100, the progress of image recording, the number of sheets printed, and the like.

The control portion 10 determines whether to apply the pretreatment liquid and the amount of it to apply in the application portion 2 according to the wet tension of the sheet S. Specifically, a table that defines the correspondence between different types of sheet S and their surface tensions (wet tensions) is stored in a storage portion (not shown) in advance. At the start of printing, the type of sheet S to be used is input from the operation panel 11 on the inkjet recording apparatus 100. The control portion 10 reads the surface tension corresponding to the input type of sheet S from the table stored in the storage portion and determines whether to apply the pretreatment liquid and the amount of it to apply in the application portion 2 based on the read surface tension.

It is thus possible to adjust the wet tension of the sheet S within an optimal range and thus to prevent repelling of and blotting with ink to obtain satisfactory images. If the wet tension of the sheet S is high, no pretreatment liquid is applied, so it is possible to prevent unnecessary consumption of the pretreatment liquid.

When the surface tension of the sheet S is 45 mN/m or less, it is preferable to apply the pretreatment liquid to the sheet S in the application portion 2. Preferably, as the surface tension of the sheet S decreases, the amount of pretreatment liquid to apply is increased.

With the image recording method described above, to the sheet S before the inkjet recording apparatus 100 forms an image on it with aqueous pigment ink, the pretreatment liquid containing resin particles is applied. This improves the wettability (wet tension) of the sheet to prevent repelling of and blotting with aqueous ink and thereby to enhance image quality. It is thus possible to use the image recording method of the present disclosure suitably on various inkjet recording apparatuses that use aqueous ink.

Setting the drying temperature in the first drying portion 5 lower than the minimum film formation temperature of the first resin particles helps prevent the first resin particles in the pretreatment liquid from forming a film early and thereby promote the drying of the pretreatment liquid. Setting the drying temperature in the second drying portion 6 higher than the minimum film formation temperature of either of the first and second resin particles helps make the resin particles in the pretreatment liquid and the ink form a film and thereby obtain good adhesion and abrasion resistance of ink to the sheet S.

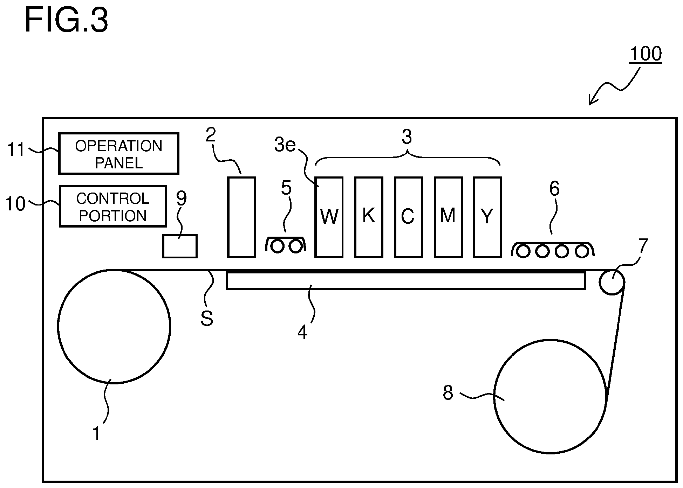

Fig. 3 is a schematic diagram showing the structure of an inkjet recording apparatus 100 according to a second embodiment of the present disclosure. In this embodiment, the recording portion 3 has a recording head 3e that ejects white ink in addition to the recording heads 3a to 3d. Also provided is a corona discharge device 9 that applies corona treatment to the sheet S. In other respects, the structure of the inkjet recording apparatus 100 is similar to that of the first embodiment shown in Figs. 1 and 2.

The recording head 3e is arranged upstream (to the left in Fig. 3) of the recording heads 3a to 3d in the sheet conveyance direction. The recording head 3e forms a background image by ejecting white ink onto the sheet S. The recording head 3e can eject white ink over the entire sheet S. However, white ink may be ejected in a part of the sheet S wider than the area where cyan, magenta, yellow, and black inks (non-white inks) are ejected by the recording heads 3a to 3d, or only in the area where non-white inks are ejected. This is preferred because the ground image can be formed with a small amount of white ink.

The white ink ejected from the recording head 3e contains at least a white pigment and water. The white ink contains no resin particles. The recording head 3e is located downstream of the application portion 2 and first drying portion 5 in the sheet conveyance direction. Thus, even if the white ink contains no resin particles, mixes with the resin particles in the pretreatment liquid; it is thus possible to obtain good adhesion and abrasion resistance to the sheet S. In other respects, the components of the white ink is similar to those of the inks (non-white inks) ejected from the recording heads 3a to 3d.

Examples of white pigments include C.I. Pigment White 4, C.I. Pigment White 5, C.I. Pigment White 6, C.I. Pigment White 6:1, C.I. Pigment White 7, C.I. Pigment White 18, C.I. Pigment White 19, C.I. Pigment White 20, C.I. Pigment White 21, C.I. Pigment White 23, C.I. Pigment White 24, C.I. Pigment White 25, C.I. Pigment White 26, C.I. Pigment White 27, and C.I. Pigment White 28. Titanium oxide may also be used as a white pigment.

From the viewpoint of satisfactory discharging of white ink from the recording head 3e, the content proportion of the white pigment in the white ink is preferably 0.1 mass% or more but 30 mass% or less, and more preferably 10 mass% or more but 20 mass% or less.

The corona discharge device 9 is arranged upstream (to the left in Fig. 3) of the application portion 2 in the sheet conveyance direction. The corona discharge device 9 performs corona discharge treatment on the sheet S to adjust the wet tension of the sheet S. Applying corona treatment to the sheet S gives the pretreatment liquid ejected from the pretreatment liquid ejection head 2a in the application portion 2 good adhesion and abrasion resistance to the sheet S.

The present disclosure can be implemented in any manner other than as in the embodiments described above, and allows for any modifications within the scope defined in the appended claims. For example, while Figs. 1 and 3 illustrate an inkjet recording apparatus 100 that ejects ink while reeling out an elongate sheet in the form of a roll at a predetermined speed, the present disclosure is applicable equally to an inkjet recording apparatus that ejects ink onto sheets cut in a predetermined shape.

While the above embodiments deal with a configuration where the pretreatment liquid is ejected by the inkjet method from a pretreatment liquid ejection head 2a, it can be applied by any method other than the inkjet method, for example, by a spray method, as long as it can be applied evenly to the sheet S.

In the above embodiments, the first drying portion 5 is arranged closely downstream of the application portion 2 that ejects the pretreatment liquid and the second drying portion 6 is arranged closely downstream of the recording portion 3 that ejects the ink. This, however, is not meant as any limitation. For example, a third drying portion may be arranged downstream of the second drying portion 6 to perform a third drying process after the second drying process. If the recording portion 3 has a plurality of recording heads 3a to 3d, the second drying portion 6 may be arranged closely downstream of each of the recording heads 3a to 3d.

The material of the recording medium is not limited to plastic film; it can be any of a variety of recording media including paper such as plain paper and coated paper and fabrics such as natural or synthetic fiber fabric, knitted fabric, or non-woven fabric. The effects of the present disclosure will be described more specifically below by way of examples, which, however, are not meant to restrict the present disclosure.

### EXAMPLES

### [Production Example 1]

### (Production of Pretreatment Liquid)

Pretreatment Liquids P1 to P6 were produced by the following method. First, the commercially available resin particle dispersion liquids (dispersions) for pretreatment liquid that were used in the preparation of the pretreatment liquids will be described below. The details of each resin particle dispersion liquid for pretreatment liquid are shown in Table 1.

### (1-1. Resin Particle Dispersion Liquids for Pretreatment Liquid)

A-1: Superflex 820 (produced by DKS Co., Ltd.)
A-2: Superflex 130 (produced by DKS Co., Ltd.)
A-3: Superflex 420NS (produced by DKS Co., Ltd.)
A-4: Superflex 870 (produced by DKS Co., Ltd.)
B-1: UC-6600 (produced by Saiden Chemical Industry Co., Ltd.)
C-1: Seporjon NE205 (produced by Sumitomo Seika Chemicals Co., Ltd.)

**[Table 1]**

| Resin Particle Dispersion Liquid | Property | Solid Content [mass%] | Particle Diameter [*µ*m] | MFT[°C] |
|---|---|---|---|---|
| A-1 | Anionic | 30±1 | 0.03 | 40 |
| A-2 | Anionic | 35±1 | 0.03 | 55 |
| A-3 | Anionic | 32±1 | 0.01 | 65 |
| A-4 | Anionic | 30±1 | 0.03 | 70 |
| B-1 | - | 46 | 0.12 | 85 |
| C-1 | - | 40 | 2.5 | 140 |

### (1-2. Preparation of Pretreatment Liquid)

Components including the resin particle dispersion liquids shown in Table 1 were, in the amounts shown in Table 2, stirred and mixed using a stirrer (Three-One Motor BL-600, produced by Shinto Scientific Co., Ltd.) to prepare Pretreatment Liquids P1 to P6. In Table 2, "Surfactant" refers to a polyether-modified silicone surfactant (SAG503, produced by Nisshin Chemical Industry Co., Ltd.), "PG" refers to propylene glycol, and "BTG" refers to butyl triglycol.

**[Table 2]**

| Materials | | P1 | P2 | P3 | P4 | P5 | P6 |
|---|---|---|---|---|---|---|---|
| ResinParticle Dispersion Liquid | A-1 | 10 | - | - | - | - | - |
| | A-2 | - | 10 | - | - | - | - |
| | A-3 | - | - | 10 | - | - | - |
| | A-4 | - | - | - | 10 | - | - |
| | B-1 | - | - | - | - | 10 | - |
| | C-1 | - | - | - | - | - | 10 |
| Water-Solble Organic Solvent | PG | 25 | 25 | 25 | 25 | 25 | 25 |
| | BTG | 8 | 8 | 8 | 8 | 8 | 8 |
| Surfactant | | 0.1 | 0.1 | 0.1 | 0.1 | 0.1 | 0.1 |
| Water | | 56.9 | 56.9 | 56.9 | 56.9 | 56.9 | 56.9 |

### [Production Example 2]

### (Production of Ink)

### (2-1. Preparation of Pigment Dispersion)

75 g of pigment-dispersed resin (DISPERBYK-190, produced by BYC Chemie Japan; non-volatile content: 40 mass%, dispersant: water) was diluted with 775 g of ion-exchange water, and 150 g of pigment (Pigment Blue 15:03) was added. The mixture was then preliminarily mixed using a Homo Disper at a rotation rate of 5000 rpm for 1 hour. The mixture was then subjected to dispersion using a bead mill (produced by Nippon Coke & Engineering Co., Ltd.) to obtain a pigment dispersion. The vessel was loaded with zirconia beads (0.2 mmφ) at a filling ratio of 80% to its volume. The diameter of the dispersion particles (Z-ave.) was 101 nm.

### (2-2. Preparation of Ink)

30 mass% of propylene glycol, 10 mass% of butyl triglycol, 1 mass% of surfactant (Surfynol 104, produced by Nisshin Chemical Industry Co., Ltd.), and 0.5 mass% of 1% of an aqueous solution of sodium hydroxide were measured in a beaker. Next, the pigment dispersion obtained as described under 2-1 above and the resin particle dispersion liquid (Superflex 130, produced by DKS Co., Ltd.) shown as A-2 in Table 1 were measured so as to contain 5 mass% of the pigment dispersion and 5 mass% of the binder resin , and water was added to make the total 100 mass%. Then the contents of the beaker was stirred using a stirrer (Three-One Motor BL-600, produced by Shinto Scientific Co., Ltd.) to evenly mix the contents at a rotation rate of 400 rpm. The mixture liquid was filtered with a filter (with a mesh size of 5 µm) to remove foreign matter and coarse particles contained in the mixture liquid. In this way, the ink was prepared.

### [Evaluation of Blotting with Ink, Abrasion Resistance, and Base Material Quality]

Using Pretreatment Liquids P1 to P6 of Production Example 1 and the ink (cyan ink) of Production Example 2, images were formed to evaluate blotting with ink, abrasion resistance, and base material quality. The test machine used for the evaluation was an inkjet recording device as shown in Fig. 1, which included piezoelectric inkjet heads (KJ4B-1200, produced by Kyocera Corporation) for discharging the pigment ink and the pretreatment liquid.

Using the test machine described above, printing was performed under the following conditions: head application voltage, 21 V; drive frequency, 20 kHz; ejected amount of liquid droplet, 3 pl; print head temperature, 32°C; print head resolution, 1200 dpi; and number of times of pre-ejection flushing, 1000 times. As the printing base material, OPP film (TORAYFAN, produced by Toray Industries, Inc.), which was a non-absorbent base material, was used.

### <Evaluation Method>

### (Blotting with Ink)

Print results of Present Disclosure 1 to 8 and Comparative Examples 1 to 12 were produced by, while changing Pretreatment Liquids P1 to P6 and the drying temperatures in the first and second drying processes, printing solid images of a horizontal stripe on the printing base material having the pretreatment liquid applied to it. The vertical length of the stripe (stripe width) in the print results of Present Disclosure 1 to 8 and Comparative Examples 1 to 12 were measured. On the other hand, as a comparative reference example (reference image), the same solid image of a horizontal stripe was printed on a specially treated polyethylene terephthalate (PET) film (GT703, produced by Toyobo Co., Ltd.) with fine pores and free from blotting, and the vertical length of the stripe was measured in the same way. The rate of increase in the vertical length of the stripe compared to the reference image was evaluated as the size of blotting with ink.

### (Evaluation Criteria)

Good: the rate of increase in the vertical length of the stripe was less than 3%.
Average: the rate of increase in the vertical length of the stripe was 3% or more but less than 5%.
Poor: the rate of increase in the vertical length of the stripe was 5% or more but less than 10%.

### (Abrasion Resistance)

Print results of Present Disclosure 1 to 8 and Comparative Examples 1 to 12 were visually inspected to check the peeling-off of ink after its being rubbed once with a 1000 g weight.

### (Evaluation Criteria)

Excellent: no peeling-off of ink was observed.
Good: peeling-off of 5% or less of ink was observed.
Average: peeling-off of 10% or less ink was observed.
Poor: peeling-off of more than 10% of ink was observed.

### (Base Material Quality)

Print results of Present Disclosure 1 to 8 and Comparative Examples 1 to 12 were visually inspected to evaluate the quality of the printing base material (OPP sheet).

### (Evaluation Criteria)

Good: quality of OPP sheet remained unchanged as before printing.
Average: OPP sheet is slightly twisted compared to before printing.
Poor: OPP sheet is notably twisted compared with before printing.

### The results of evaluation of blotting with ink, abrasion resistance, and base material quality are shown in Table 3, along with the types of pretreatment liquids used and the drying conditions.

**[Table 3]**

| | Pretreatment Liquid | Drying Process | | Blotting with Ink | Abrasion Resistance | Base Material Quality |
|---|---|---|---|---|---|---|
| | | 1st Drying Process | 2nd Drying Process | | | |
| Present Disclosure 1 | P3 | 50 | 80 | Good | Excellent | Good |
| Present Disclosure 2 | P3 | 55 | 80 | Good | Excellent | Good |
| Present Disclosure 3 | P3 | 60 | 80 | Good | Excellent | Good |
| Present Disclosure 4 | P2 | 50 | 80 | Good | Excellent | Good |
| Present Disclosure 5 | P4 | 50 | 80 | Good | Excellent | Good |
| Present Disclosure 6 | P4 | 55 | 80 | Good | Excellent | Good |
| Present Disclosure 7 | P4 | 60 | 80 | Good | Excellent | Good |
| Present Disclosure 8 | P4 | 65 | 80 | Good | Excellent | Good |
| Comparative Example1 | P1 | 50 | 80 | Average | Excellent | Good |
| Comparative Example2 | P1 | 55 | 80 | Average | Excellent | Good |
| Comparative Example3 | P1 | 60 | 80 | Poor | Excellent | Good |
| Comparative Example4 | P2 | 55 | 80 | Average | Excellent | Good |
| Comparative Example5 | P2 | 60 | 80 | Poor | Excellent | Good |
| Comparative Example6 | P3 | 80 | 80 | Poor | Excellent | Good |
| Comparative Example7 | P3 | 80 | 90 | Poor | Excellent | Poor |
| Comparative Example8 | P4 | 80 | 80 | Poor | Excellent | Good |
| Comparative Example9 | P4 | 80 | 90 | Poor | Excellent | Poor |
| Comparative Example10 | P5 | 60 | 80 | Good | Poor | Good |
| Comparative Example11 | P6 | 60 | 80 | Good | Poor | Good |
| Comparative Example12 | P6 | 60 | 90 | Good | Poor | Poor |

As will be understood from Table 3, Present Disclosure 1 to 8, in which resin particles (first resin particles) with a minimum film formation temperature higher than the first drying temperature were added to the pretreatment liquid, the drying temperature in the first drying process was lower than the minimum film formation temperature of the resin particles in the pretreatment liquid, and the drying temperature in the second drying process was higher than the minimum film formation temperature of the resin particles (first resin particles) in the pretreatment liquid and the resin particles in the ink (second resin particles) all proved to be satisfactory: the rate of increase in the vertical length of the stripe in the print result was less than 3% , no peeling-off of ink was observed after its being rubbed with a 1000 g weight, and no quality deterioration of the OPP sheet as the printing base material was observed.

In contrast, in all of Comparative Examples 1 to 9, in which the drying temperature in the first drying process was set higher than the minimum film formation temperature of the resin particles (first resin particles) in the pretreatment liquid, the rate of increase in the vertical length of the stripe in the print result was 3% or more in all cases. The reason for this is considered to be that, as a result of the resin particles contained in the pretreatment liquid starting to form a film early and preventing evaporation of moisture, the drying of the pretreatment liquid during printing was insufficient. In Comparative Examples 7 and 9, in which the drying temperature in the second drying process was set to 90°C, the OPP sheet as the printing base material was notably twisted compared with before printing.

In Comparative Examples 10 to 12, in which the drying temperature in the second drying process was set lower than the minimum film formation temperatures of the resin particles (first resin particles) in the pretreatment liquid and the resin particles (second resin particles) in the ink, peeling-off of more than 10% of ink was observed after the printed result was rubbed with a 1000 g weight and the abrasion resistance was poor. The reason for this is considered to be that, due to insufficient heating, the resin did not form a film with satisfactory coating quality.

The results of Present Disclosure 1 to 9 and Comparative Examples 1 to 12 reveal that, by adding first resin particles with a minimum film formation temperature of 40 to 80°C to the pretreatment liquid, adding second resin particles with a minimum film formation temperature of 35 to 80°C to the ink, setting the drying temperature in the first drying process lower than the minimum film formation temperature of the first resin particles, and setting the drying temperature in the second drying process higher than the higher of the minimum film formation temperatures of the first and second resin particles, it is possible to effectively prevent blotting with ink and to improve the abrasion resistance of the print result. The results also reveal that, by setting the drying temperature in the second drying process to 80°C or less, even if the printing base material is an OPP sheet, which is prone to thermal deterioration, it is possible to prevent twisting of the OPP sheet after printing.

The present disclosure is applicable to inkjet recording apparatuses that eject ink onto a recording medium. Based on the present disclosure, it is possible to provide an inkjet recording apparatus that can prevent repelling of and blotting with ink when images are formed with aqueous ink.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. An inkjet recording apparatus (100), comprising at least:
a conveyance portion (1) that conveys a recording medium (S);
an application portion (2) that applies a pretreatment liquid to the recoding medium (S) conveyed by the conveyance portion (1);
a first drying portion (5) arranged downstream of the application portion (2) with respect to a conveyance direction of the recoding medium (S), the first drying portion drying the pretreatment liquid applied to the recoding medium (S) by the application portion (2);
a recording portion (3) arranged downstream of the first drying portion (5) with respect to the conveyance direction of the recoding medium (S), the recording portion having a first recording head (3a-3d) that ejects ink onto the recording medium (S); and
a second drying portion (6) arranged downstream of the recording portion (3) with respect to the conveyance direction of the recoding medium (S), the second drying portion drying the ink applied to the recoding medium (S) by the recording portion (3);
**characterized in that**
the pretreatment liquid contains first resin particles with a minimum film formation temperature of 40°C or more but 80°C or less,
the ink contains second resin particles with a minimum film formation temperature of 35°C or more but 80°C or less, and
when the minimum film formation temperature of the first resin particles is a first minimum film formation temperature and the minimum film formation temperature of the second resin particles is a second minimum film formation temperature, a drying temperature in the first drying portion (5) is lower than the first minimum film formation temperature and a drying temperature in the second drying portion (6) is higher than the first and second minimum film formation temperatures.

2. The inkjet recording apparatus (100) according to claim 1, further comprising:
a second recording head (3e) arranged upstream of the first recording head (3a-3d) with respect to the conveyance direction of the recoding medium (S), the second recording head ejecting white ink.

3. The inkjet recording apparatus (100) according to claim 2, **characterized in that** the second recording head (3e) is arranged downstream of the first drying portion (5) with respect to the conveyance direction of the recoding medium (S).

4. The inkjet recording apparatus (100) according to claim 3, **characterized in that** the white ink contains no resin particles.

5. The inkjet recording apparatus (100) according to claim 1, **characterized in that** the recoding medium (S) is a sheet of resin, and the inkjet recording apparatus further includes a corona treatment portion (9) that is arranged upstream of the application portion (2) with respect to the conveyance direction of the recoding medium (S) and that performs corona discharge treatment on the sheet.

6. The inkjet recording apparatus (100) according to claim 1, **characterized in that** the application portion (2) is a pretreatment liquid ejection head (2a) that ejects the pretreatment liquid by an inkjet method.

7. The inkjet recording apparatus (100) according to any one of claims 1 to 6, **characterized in that**
the recoding medium (S) is a sheet of biaxially oriented polypropylene, and
the drying temperature in the second drying portion (6) is 80°C or less.
